(19) Europäisches Patentamt
European Patent Office
Office européen des brevets

(11) Numéro de publication : **0 466 567 B1**

# (12) FASCICULE DE BREVET EUROPEEN

(45) Date de publication du fascicule du brevet : **29.12.93 Bulletin 93/52**

(51) Int. Cl.$^5$ : **C10G 45/36**

(21) Numéro de dépôt : **91401879.1**

(22) Date de dépôt : **08.07.91**

## (54) Hydrogénation sélective des dioléfines dans les essences de vapocraquage sur des catalyseurs à base d'un métal supporte dans lesquels un composé organique soufré a été incorporé avant chargement dans le réacteur.

(30) Priorité : **13.07.90 FR 9009079**

(43) Date de publication de la demande : **15.01.92 Bulletin 92/03**

(45) Mention de la délivrance du brevet : **29.12.93 Bulletin 93/52**

(84) Etats contractants désignés : **AT BE DE GB IT LU NL**

(56) Documents cités :
**BE-A- 676 321**
**DE-A- 1 470 485**
**DE-B- 1 190 127**
**US-A- 3 893 944**

(73) Titulaire : **INSTITUT FRANCAIS DU PETROLE**
**4, Avenue de Bois Préau**
**F-92506 Rueil-Malmaison Cédex (FR)**

(72) Inventeur : **Boitiaux, Jean-Paul**
**4, avenue des Ursulines**
**F-78300 Poissy (FR)**
Inventeur : **Sarrazin, Patrick**
**5, Allée des Glycines**
**F-92500 Rueil Malmaison (FR)**

**EP 0 466 567 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne l'hydrogénation sélective des dioléfines dans les coupes hydrocarbures liquides comme par exemple les essences de vapocraquage. Ces essences contiennent en effet des composés générateurs de gommes que sont les dioléfines en mélange avec des composés oléfiniques et des composés aromatiques. Pour pouvoir valoriser ces composés oléfiniques et ces composés aromatiques, il est nécessaire d'hydrogéner sélectivement les dioléfines.

De tels traitements sont généralement effectués sur des catalyseurs métalliques déposés sur support amorphe ou cristallin. Les métaux utilisés sont les métaux du groupe VIII et parmi ceux-ci, on peut noter le nickel qui est d'un usage courant.

Cependant les catalyseurs au nickel ne sont pas suffisamment sélectifs car ils ont une tendance marquée à hydrogéner une part importante des oléfines contenues dans la charge, même lorsque les hydrogénations sont effectuées à basses pressions, de l'ordre de 30 à 50 bar et à basse température, entre 50 et 180 degrés celcius.

Il est connu que l'amélioration de la sélectivité de ces catalyseurs peut être obtenue en injectant des composés sulfurés avant la mise en contact du catalyseur avec la charge réactive (brevet Anglais N° 979307). Ces composés peuvent être choisis parmi les composés suivants : Thiophène, thiophane, alkylmonosulfures tels que diméthylsulfure, diéthylsulfure, dipropylsulfure, propylméthylsulfure etc.

Cette sulfuration est cependant délicate à réaliser car il est nécessaire que le composé sulfuré soit très également réparti sur l'ensemble du lit catalytique jour que l'on puisse effectivement obtenir un effet marqué sur la sélectivité. De plus cette procédure est coûteuse et longue, ce qui se traduit en perte de production.

Le manque de sélectivité intrinsèque du catalyseur au nickel ne se manifeste pas seulement vis-à-vis des oléfines, il se manifeste également vis-à-vis des aromatiques. C'est ainsi qu'au démarrage d'un catalyseur au nickel, même sélectivé par un composé sulfuré du type de ceux indiqués ci-dessus, il est nécessaire d'utiliser une charge de démarrage non réactive, ne contenant ni dioléfine, ni oléfine et très peu d'aromatiques. En effet l'hydrogénation des dioléfines ou éventuellement des oléfines sur les catalyseurs neufs qui sont très actifs, provoque un dégagement de chaleur suffisant pour élever la température du catalyseur à des niveaux bien supérieurs à 200° C, ce qui peut provoquer l'hydrogénation des aromatiques. Cette dernière réaction est encore plus exothermique et la température peut dépasser 600 °C, ce qui a pour résultat de provoquer le craquage des hydrocarbures, une réaction, elle-aussi très exothermique. C'est ainsi que les températures atteintes lors de ces emballements peuvent dépasser les températures de calcul des réacteurs en acier, ce qui oblige à remplacer non seulement la charge de catalyseur mais aussi le réacteur lui-même.

L'objet de l'invention est donc d'utiliser un moyen de sélectiver ou autrement dit d'inhiber suffisamment la charge de catalyseurs de préférence de catalyseur au nickel pour ne pas courir le risque de ces emballements même si l'on utilise pour la mise en huile du réacteur une charge réactive. Il a été en effet trouvé de façon surprenante que l'introduction de modérateurs organiques sur le catalyseur en l'absence d'hydrogène avant son chargement dans le réacteur et avant l'activation du catalyseur par de l'hydrogène permet une modération très marquée du catalyseur permettant son démarrage avec une charge réactive. Les modérateurs utilisés peuvent être, sans que cela limite la validité de l'invention à ces seuls composés, des composés sulfurés et notamment des composés sulfurés organiques décomposables dans les traitements d'activation du catalyseur dans le réacteur. Ces activations sont faites sous atmosphères neutres ou réductrices à des températures comprises entre 250 et 600 °C et de préférence entre 250 et 450 °C.

De plus le traitement du catalyseur avant son chargement augmente nettement sa stabilité et donc la durée de vie.

Le brevet belge BE-A-676321 et le brevet allemand 1470485 décrivent l'emploi, mais en présence d'hydrogène, d'un composé du soufre.

Les composés organiques soufrés utilisables dans la présente invention sont en particulier les sulfures alkyles ou aryles organiques ou les sulfures alkylaryle ou arylalkyle organiques. On citera à titre d'exemples le butyléthylsulfure, le diallylsulfure, le dibutylsulfure, le dipropylsulfure, le diméthylthiophène et l'éthylthiophène.

On peut utiliser de façon plus générale les thiols (thioalcools, mercaptans, thiophénols) de formule $R_1$-SH où $R_1$ est un radical organique, les thioéthers de formule $R_1$-S-$R_2$, où $R_1$ et $R_2$ sont identiques ou différents, les disulfures organiques de formule $R_1$-S-S-$R_2$ et des disulfures du type HO-$R_1$-S-S-$R_2$-OH, pris séparément ou en combinaison.

On peut également choisir un agent sulfuré organique choisi dans le groupe constitué par les thiodiazoles, les thioacides organiques, les thioamides, les thioesters, les thiophénols. On citera à titre d'exemple l'acide thiobenzoique, les thiocrésols, l'acide 3,3 thiodipropionitrile, le 2,3,6 triméthylthiophénol, le méthyl thioglycollate, le naphtalène 2-thiol, le phényl isothiocyanate, le 2 phényl thiophénol, le thioacétamide, le thiobenzamide,

le 2,6 diméthyl thiophénol, le 3,5 diméthylthiophénol, le 2,2' dinitrodiphényl disulfure, la 2,5 dithiobiurée, l'éthyl thioglycollate, le 2-méthoxy thiophénol, le 3- méthoxy thiophénol.

L'invention peut également être effectuée en présence d'autres types d'additifs soufrés. On pourra ainsi citer les mercapto-alcools de formule :

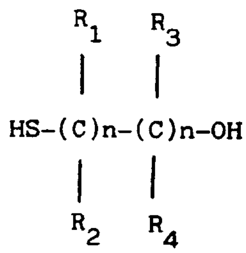

où n et m sont des nombres entiers, $R_1$, $R_2$, $R_3$, $R_4$, identiques ou différents sont des atomes d'hydrogène ou des radicaux organiques alkyle, aryle, aralkyle etc... ayant de 1 à 20 ; de préférence de 1 à 6 atomes de carbone par molécule ; de préférence n = 1-10 (exemple 1-2) et m = 1-10 (exemple 1).

On peut citer également les monothioglycols tel que le monothioéthylèneglycol, les dithioglycols tel que le dithiopropylène glycol, les dithiobenzènes tel que la dithiorésorcine, les hétérocycles substitués par des groupes mercapto tels que la mercaptopyridine, la mercaptopyrimidine etc..., les dihydroxyalkyle sulfures tel que le thiodiéthylène glycol ($S(CH_2CH_2OH)_2$), le thiodipropylène glycol etc..., les diaryl sulfures tel que le diphényl sulfure, les diaralkyl sulfures tel que le dibenzylsulfure, les thioéthers cycliques et leurs dérivés substitués (éthylène sulfure, thiophène, thiazole, thiopyrone, thioxanthone, thioxanthydrol, 1,4 thioxane etc...), les S alkyle éthers de hétérocycles substitués par des mercaptans (2- méthylthio 4,6 diamino pyrimidine etc...).

Parmi les familles des composés précédents, on citera plus particulièrement le diméthylsulfoxyde, l'éthylthiol éthanol, l'acide thio glycolique, le dithioglycol et les disulfures organiques de formule notamment $HO-R_1-S-S-R_2-OH$ comme indiqué plus haut ou $HO-(CH_2)_x-S-(CH_2)_{x'}-S-(CH_2)_{x''}-OH$ où $R_1$ et $R_2$ sont définis comme précédemment, où x, x', x", identiques ou différents sont un nombre entier.

On peut citer plus particulièrement à titre d'exemple le diéthanol disulfure ou 2,2 dithio bis éthanol (D.E.O.D.S.) de formule $HO-C_2H_4-S-S-C_2H_4-OH$ soluble notamment dans l'eau, les glycols et les polyglycols.

On peut également utiliser un polysulfure de formule R-Sn-R' où n est un nombre entier de 3 à 20, de préférence de 4 à 8 et plus particulièrement de 5 à 7, R et R', identiques ou différents, représentent des radicaux organiques renfermant chacun 1 à 150 atomes de carbone par molécule, de préférence soit 10 à 60 atomes de carbone soit 5 à 40 atomes de carbone et plus particulièrement 7 à 16, ces radicaux étant choisis dans le groupe constitué par les radicaux alkyles c'est-à-dire saturés ou insaturés, linéaires ou ramifiés ou de type naphténique, les radicaux aryles, les radicaux alkylaryles et les radicaux arylalkyles, ces divers radicaux pouvant comporter au moins un hétéroatome. R' éventuellement peut également être un atome d'hydrogène.

On peut citer, à titre d'exemple préféré de polysulfure, le ditertiododécylpolysulfure (n = 5) où R et R' sont chacun un radical tertio-dodécyle.

Ce produit est commercialisé par exemple par ELF AQUITAINE sous le nom de TPS 32, notamment parce qu'il contient 32 % poids de soufre. On peut citer également le ditertiononylpolysulfure (n = 5) où R et R' sont chacun un radical tertio-nonyle.

L'agent de prétraitement est utilisé, dilué dans un solvant adéquat qui dépend notamment de la nature de l'agent de sulfuration. Le solvant choisi peut être un des solvants suivants utilisés seuls ou en mélange :

- une essence légère bouillant par exemple entre environ 60 et 95°C
- une essence de type hexane bouillant entre 63 et 68° C environ
- une essence de type F bouillant entre environ 100 et 160°C et contenant généralement 10 à 20 % d'hydrocarbures aromatiques, par exemple 15 %, en volume,
- une essence de type "white spirit" bouillant entre environ 150 et 250 °C et renfermant généralement 14 à 22 % d'hydrocarbures aromatiques, par exemple 17 % en volume,
- ou toute coupe hydrocarbonnée ou non, équivalente aux essences précédentes.

L'agent peut être utilisé dans un autre solvant tel que, par exemple, les alcools (méthanol, éthanol, propanol, etc...), les aldéhydes, les cétones, les éthers, les alcools, polyalcools, acides et polyacides, l'eau, les glycols.

Dans la présente invention on incorporera avantageusement dans le catalyseur 0,05 % à 10 % et de préférence 0,2 % à 1 % de soufre exprimé en poids de soufre par rapport à la masse de catalyseur.

Les exemples suivants illustrent l'invention sans en limiter l'application.

EXEMPLE 1 (comparaison):

On dispose 100 $cm^3$ de catalyseur LD 241 de la Société Procatalyse contenant 10 % de nickel supporté sur alumine dans un tube en acier de 3 cm de diamètre. Ce catalyseur, utilisé couramment pour hydrogéner les essences de vapocraquage, est activé dans les conditions suivantes :

| | |
|---|---|
| Débit d'hydrogène | : 30 l/h |
| Pression | : atmosphérique |
| Température | : 400 °C |
| Durée | : 15 heures |

On refroidit le catalyseur sous débit d'hydrogène puis on purge l'installation à l'azote.

On mesure ensuite l'activité hydrogénante du catalyseur avec une charge hydrocarbonée de composition suivante :

30 % poids de toluène dans du n-heptane.

Cette charge est passée en flux ascendant avec de l'hydrogène à travers le lit de catalyseur dans les conditions suivantes :

| | |
|---|---|
| Pression | : 30 bar |
| Température | : variable entre 50 et 70 °C |
| Débit d'hydrocarbure | : 200 $cm^3$/h |
| Débit d'hydrogène | : 60 l/h |

Le taux d'hydrogénation est suivi par chromatographie phase vapeur sur une colonne carbowax de 50 m.

Les résultats obtenus sont présentés dans le tableau 1 ci-dessous :

TABLEAU 1

| Température | Taux de conversion du toluène |
|---|---|
| 50°C | 12 % |
| 70°C | 29 % |

On peut voir que ce catalyseur hydrogène très facilement les composés aromatiques, même à température relativement basse. Un tel comportement explique les emballements constatés lors de certains démarrages.

EXEMPLE 2 (comparaison) :

On dispose 1000 $cm^3$ du même catalyseur que ci-dessus dans un tube en acier d'un diamètre 7 cm ; Le réacteur est muni d'une canne thermométrique interne ainsi que de thermocouples sur la paroi externe. L'unité est équipée de systèmes de purges rapides à l'azote pour le cas où un phénomène thermique divergeant du type emballement se produirait. Dans ce cas le réacteur est automatiquement relié à un système d'évacuation et balayé par un grand débit d'azote.

L'ensemble étant toujours sous hydrogène à une pression proche de la pression atmosphérique, on introduit par une pompe à raison de 1 l/h une essence de vapocraquage ayant les caractéristiques suivantes :

| | |
|---|---|
| Intervalle de distillation | : 39-181°C |
| Densité | : 0,834 |
| Soufre | : 150 ppm |
| Diènes | : 16 % poids |
| Oléfines | : 4 % poids |
| Aromatiques | : 68 % poids |

Paraffines : 12 % poids.

Dès que les premières couches de catalyseur sont mouillées par l'essence, on détecte une augmentation de température qui va croissant avec le temps comme l'indique le tableau 2 ci-dessous où on a reporté la lecture du thermocouple interne situé au premier tiers du lit catalytique.

TABLEAU 2

| TEMPS | TEMPERATURE (°C) |
|---|---|
| Début de l'injection | 40 |
| 1 mn | 40 |
| 4 mn | 45 |
| 5 mn | 52 |
| 6 mn | 58 |
| 7 mn | 70 |
| 8 mn | 100 |
| 9 mn | 120 |

La limite de température ayant été fixée à 150°C, le réacteur a été évacué au bout de 10 mn. Lors du déchargement on a pu constater que les billes de catalyseur étaient grises en masse dans du carbone provenant de la polymérisation de l'essence.

EXEMPLE 3 (comparaison) :

On reprend le même test que dans l'exemple 1 mais le catalyseur est traité avec du diméthylsulfure après son activation à l'hydrogène dans les conditions suivantes :
On débite pendant 2 h une solution de n-heptane contenant 700 mg de diméthylsulfure par litre, à raison de 250 $cm^3/h$ et à une température de 50°C, (0,15 % de soufre fixé sur le catalyseur) après quoi on mesure de la même façon que dans l'exemple 1 le taux de conversion des aromatiques. Les résultats obtenus sont présentés dans le tableau 3 ci-dessous.

TABLEAU 3

| TEMPERATURE | TAUX DE CONVERSION DU TOLUENE |
|---|---|
| 50°C | 0 % |
| 70°C | 3,3 % |

On voit que le traitement au diméthylsulfure dans le réacteur permet de diminuer grandement l'hydrogénation des aromatiques.
On obtient sensiblement les mêmes résultats en effectuant simultanément l'activation à l'hydrogène et l'introduction du composé sulfuré.

EXEMPLE 4 (comparaison) :

On effectue la même expérimentation que dans l'exemple 2 mais en appliquant un traitement de sélectivation semblable à celui de l'exemple 3. Ce traitement consiste à débiter, après activation du catalyseur à l'hydrogène, pendant 2 h une solution de n-heptane contenant 700 mg de diméthylsulfure par litre, à raison de 2500 $cm^3/h$ et à une température de 50 °C, (0,8 % de soufre fixé sur le catalyseur) après quoi on admet de la même façon que dans l'exemple 2 l'essence de vapocraquage de caractéristique décrite ci-dessus. L'élévation de température est moins brusque et se limite à une quinzaine de degrés après quoi l'exothermicité disparait lorsque l'ensemble du lit catalytique est mouillé.

On dispose alors 100 $cm^3$ de catalyseur dans un tube de 3 cm de diamètre, on réduit ce catalyseur comme décrit ci-dessus puis on lui fait subir le traitement au diméthylsulfure décrit dans l'exemple 3. On mesure alors l'activité hydrogénante du catalyseur vis-à-vis des dioléfines contenues dans l'essence de vapocraquage décrite ci-dessus. Les conditions du test sont les suivantes :

| | |
|---|---|
| pression | : 30 bar |
| température | : 100 °C |
| débit d'hydrocarbure | : 800 cm/h |
| débit d'hydrogène | : 160 l/h |

Les performances sont mesurée par la variation de l'indice d'anhydride maléique (MAV) entre l'entrée et la sortie du réacteur. La charge donne une MAV de 106, les MAV des produits sont donnés en fonction du temps de marche dans le tableau 4 ci-dessous :

TABLEAU 4

| TEMPS DE MARCHE EN HEURES | 50 | 100 | 200 | 500 | 750 | 1000 | 2000 |
|---|---|---|---|---|---|---|---|
| MAV DU PRODUIT | 14 | 29 | 32 | 35 | 39 | 42 | 50 |

On peut voir que le catalyseur est actif mais que la conversion diminue doucement mais régulièrement au cours du temps. Cette diminution est le signe d'un encrassement provoqué par l'action polymérisante du nickel.

EXEMPLE 5 (selon l'invention) :

Un lot de catalyseur LD 241 dont les caractéristiques sont données ci -dessus est utilisé pour préparer les catalyseurs "inhibés" selon la technique de l'invention. 7 catalyseurs sont préparés comme décrits ci-dessous, ils sont identifiés par les références NiA, NiB, NiC, NiD, NiE, NiF, NiG.

On dissout 3,1 g de butyléthylsulfure dans 50 $cm^3$ d'alcool éthylique. Cette solution alcoolique est mise en contact avec 100 g de catalyseur dans un erlenmeyer de 250 $cm^3$. Au bout de 5 minutes toute la solution a été absorbée par le solide. On laisse l'ensemble en l'état pendant 2 heures après quoi on sèche le solide à l'étuve à 120 °C pendant 6 heures. Le solide obtenu constitue le catalyseur NiA, il contient 0,82 % de soufre.

On dissout 2,8 g de diallylsulfure dans 50 $cm^3$ d'éthanol et l'on procède de la même façon que ci-dessus pour préparer le catalyseur Nib, il contient 0,78 % de soufre.

On dissout 3,9 g de dibuthylsulfure dans 50 $cm^3$ d'éthanol et l'on procède de la même façon que ci-dessus pour préparer le catalyseur NiC, il contient 0,85 % de soufre.

On dissout 3,0 g de dipropylsulfure dans 50 $cm^3$ d'éthanol et l'on procède de la même façon que ci-dessus pour préparer le catalyseur NiD, il contient 0,8 % de soufre.

On dissout 3,2 g de diméthylthiophène dans 50 $cm^3$ d'éthanol et l'on procède de la même façon que ci - dessus pour préparer le catalyseur NiE, il contient 0,9 % de soufre.

On dissout 3,1 g d'éthylthiophène dans 50 $cm^3$ d'éthanol et l'on procède de la même façon que ci-dessus pour préparer le catalyseur NiF, il contient 0,87 % de soufre.

On dissout 3,9 g de dibuthylsulfure dans 50 $cm^3$ d'heptane et l'on procède de la même façon que ci-dessus pour préparer le catalyseur NiG, il contient 0,85 % de soufre.

EXEMPLE 6 (selon l'invention) :

Les catalyseurs de l'exemple 5 sont testés en hydrogénation du toluène à 70 et 120 °C de la même façon que dans l'exemple 1. Les résultats obtenus sont présentés dans le tableau 5.

TABLEAU 5

| Catalyseur | 70°C | 120°C |
|---|---|---|
| NiA | 0 | 1,5 % |
| NiB | 0 | 1,3 % |
| NiC | 0 | 1,6 % |
| NiD | 0 | 1,7 % |
| NiE | 0 | 1,6 % |
| NiF | 0 | 1,2 % |

On peut voir que l'ajout du composé sulfuré en dehors du réacteur permet d'inhiber de façon importante l'hydrogénation du toluène. Cette inhibition est plus efficace que par introduction du diméthylsulfure dans le réacteur.

EXEMPLE 7 (selon l'invention) :

On imprègne, de la même façon que dans l'exemple 5, 1000 $cm^3$ de catalyseur LD 241 avec 500 $cm^3$ d'une solution éthanolique contenant 45, 6 g de dibutyldisulfure. Après séchage à l'étuve à 120 °C pendant 6 heures, on obtient le catalyseur NiH.

De la même façon, on imprègne 1000 $cm^3$ de catalyseur LD 241 avec 500 $cm^3$ d'une solution de 35 g de diméthylthiophène dans l'heptane. Après séchage, on obtient le catalyseur NiJ.

On effectue le même test que dans l'exemple 2 avec les deux catalyseurs NiJ et NiH.

L'élévation de température n'excède pas 10 °C dans les deux cas.

EXEMPLE 8 (selon l'invention) :

Les catalyseurs de l'exemple 5 sont disposés dans un tube de diamètre 3 cm et testés en hydrogénation d'essence de vapocraquage comme dans l'exemple 4. Les valeurs de MAV trouvées en sortie en fonction du temps de marche sont présentés dans le tableau 6.

TABLEAU 6 : MAV DU PRODUIT

| TEMPS DE MARCHE EN HEURES | 50 | 100 | 500 | 750 | 1000 | 2000 | 3000 |
|---|---|---|---|---|---|---|---|
| NiA | 31 | 32 | 33 | 33 | 33 | 34 | 33 |
| NiB | 32 | 34 | 34 | 34 | 34 | 35 | 35 |
| NiC | 29 | 30 | 30 | 28 | 32 | 32 | 32 |
| NiD | 31 | 32 | 32 | 34 | 34 | 33 | 34 |
| NiE | 22 | 28 | 31 | 31 | 32 | 33 | 33 |
| NiF | 24 | 29 | 33 | 34 | 34 | 35 | 35 |
| NiG | 35 | 35 | 33 | 33 | 34 | 35 | 35 |

On peut voir que les catalyseurs prétraités en dehors du réacteur d'hydrogénation ne présentent aucun problème de démarrage, parviennent plus rapidement à un niveau de performance stable et que leur stabilité dans le temps est nettement améliorée.

EXEMPLE 9 (selon l'invention) :

Deux kg de catalyseur LD 241 sont prétraités par du ditertiododécylsulfure en suspension dans de l'éthanol de façon à incorporer 0,8 % de soufre sur le catalyseur.

On dispose 100 g de ce catalyseur dans un tube de 3 cm de diamètre et on teste son activité en hydrogénation du toluène comme dans l'exemple 1. Les résultats obtenus sont présentés dans le tableau 7.

TABLEAU 7

| TEMPERATURE | TAUX DE CONVERSION DU TOLUENE |
|---|---|
| 70°C | 0 % |
| 120°C | 0,7 % |

L'inhibition est donc en tout point satisfaisante avec ce traitement. Le test de l'activité hydrogénante et de la stabilité est ensuite effectué avec la même essence de vapocraquage et dans les mêmes conditions que dans l'exemple 8.

Les résultats sont présentés dans le tableau 8.

TABLEAU 8

| TEMPS DE MARCHE EN HEURES | 50 | 100 | 500 | 750 | 1000 | 2000 | 3000 |
|---|---|---|---|---|---|---|---|
| MAV DU PRODUIT | 29 | 30 | 30 | 30 | 30 | 32 | 33 |

**Revendications**

1. Procédé d'hydrogénation sélective des dioléfines dans les essences de vapocraquage en présence d'un catalyseur à base d'au moins un métal du groupe VIII de la classification périodique des éléments, déposé sur un support et contenant 0,05 à 10% de soufre (exprimé en poids de soufre), caractérisé en ce que préalablement à l'emploi du catalyseur et préalablement à son activation par de l'hydrogène, au moins un agent soufré à base d'un composé organique renfermant du soufre est incorporé dans ledit catalyseur.

2. Procédé selon la revendication 1 dans lequel on incorpore 0,2 à 1 % de soufre dans la masse du catalyseur.

3. Procédé selon l'une des revendications 1 ou 2 dans lequel le catalyseur renferme au moins du nickel au titre du métal du groupe VIII.

4. Procédé selon l'une des revendications 1 à 3 dans lequel l'agent soufré est un thioéther de formule $R_1$-S-$R_2$ où $R_1$ et $R_2$ identiques ou différents, pris séparément ou en combinaison, sont des radicaux organiques.

5. Procédé selon l'une des revendications 1 à 3 dans lequel l'agent soufré est un thiol de formule $R_1$-SH où $R_1$ est un radical organique.

6. Procédé selon l'une des revendications 1 à 3 dans lequel l'agent soufré est un disulfure organique de formule $R_1$-S-S-$R_2$ où $R_1$ et $R_2$ identiques ou différents, pris séparément ou en combinaison, sont des radicaux organiques.

7. Procédé selon l'une des revendications 1 à 3 dans lequel l'agent soufré est un disulfure de formule HO-$R_1$-S-S-$R_2$-OH où $R_1$ et $R_2$ sont des radicaux organiques.

8. Procédé selon l'une des revendications 1 à 3 dans lequel l'agent soufré est un polysulfure organique de formule R-(S)n-R' où R et R' identiques ou différents sont des radicaux organiques et où n est un nombre entier de 3 à 20.

**Patentansprüche**

1. Verfahren zur selektiven Hydrierung von Diolefinen in Dampfcrackbenzinen in Gegenwart eines auf einen Träger abgelagerten Katalysators auf der Grundlage von mindestens einem Metall der Gruppe VIII des Periodensystems der Elemente, der mindestens 0,05 bis 10 % Schwefel (ausgedrückt in Gewicht des Schwefels) enthält, dadurch gekennzeichnet, daß vor der Verwendung des Katalysators und vor seiner

Aktivierung durch Wasserstoff mindestens ein schwefelhaltiges Agens auf Basis einer organischen schwefelhaltigen Verbindung in den besagten Katalysator eingeführt wird.

2. Verfahren nach Anspruch 1, bei dem 0,2 bis 1 % Schwefel in die Katalysatormasse eingeführt werden.

3. Verfahren nach einem der Ansprüche 1 oder 2, bei dem der Katalysator als Metall der Gruppe VIII zumindest Nickel enthält.

4. Verfahren nach einem der Ansprüche 1 bis 3, bei dem das schwefelhaltige Agens ein Thioether mit der Formel $R_1$-S-$R_2$ ist, bei dem $R_1$ und $R_2$, identisch oder voneinander verschieden, einzeln oder kombiniert genommen, organische Radikale sind.

5. Verfahren nach einem der Ansprüche 1 bis 3, bei dem das schwefelhaltige Agens ein Thiol der Formel $R_1$-S-H ist, bei dem $R_1$ ein organisches Radikal ist.

6. Verfahren nach einem der Ansprüche 1 bis 3, bei dem das schwefelhaltige Agens ein organisches Disulfid der Formel $R_1$-S-S-$R_2$ ist, bei dem $R_1$ und $R_2$, identisch oder voneinander verschieden, einzeln oder kombiniert genommen, organische Radikale sind.

7. Verfahren nach einem der Ansprüche 1 bis 3, bei dem das schwefelhaltige Agens ein Disulfid der Formel HO-$R_1$-S-S-$R_2$-OH ist, bei dem $R_1$ und $R_2$ organische Radikale sind.

8. Verfahren nach einem der Ansprüche 1 bis 3, bei dem das schwefelhaltige Agens ein organisches Polysulfid der Formel R-$(S)_n$-R' ist, bei dem $R_1$ und $R_2$, identisch oder voneinander verschieden, organische Radikale sind und n eine ganze Zahl zwischen 3 und 20 ist.

## Claims

1. Process for the selective hydrogenation of diolefins in steam cracking petrols in the presence of a catalyst based on at least one metal of group VIII of the periodic classification of elements, deposited on a support and containing 0.05 to 10% sulphur (expressed by weight of sulphur), characterized in that prior to the use of the catalyst and prior to its activation by hydrogen, at least one sulphur agent based on an organic ccmpound containing sulphur is incorporated into the catalyst.

2. Process according to claim 1, wherein 0.2 to 1% sulphur are incorporated into the catalyst mass.

3. Process according to one of the claims 1 and 2, wherein the catalyst contains at least nickel as the metal of group VIII.

4. Process according to any one of the claims 1 to 3, wherein the sulphur agent is a thioether of formula $R_1$-S-$R_2$, in which $R_1$ and $R_2$, which can be the same or different and taken separately or in combination, are organic radicals.

5. Process according to any one of the claims 1 to 3, wherein the sulphur agent is a thiol of formula $R_1$-SH, in which $R_1$ is an organic radical.

6. Process according to any one of the claims 1 to 3, wherein the sulphur agent is an organic disulphide of formula $R_1$-S-S-$R_2$, in which $R_1$ and $R_2$, which can be the same or different and taken separately or in combination, are organic radicals.

7. Process according to any one of the claims 1 to 3, wherein the sulphur agent is a disulphide of formula HO-$R_1$-S-S-$R_2$-OH, in which $R_1$ and $R_2$ are organic radicals.

8. Process according to any one of the claims 1 to 3, wherein the sulphur agent is an organic polysulphide of formula R-(S)n-R', in which R and R', which are the same or different, are organic radicals and in which n is an integer between 3 and 20.